# EUROPÄISCHE PATENTSCHRIFT

(11) **EP 3 543 927 B1**
(45) Veröffentlichungstag und Bekanntmachung des Hinweises auf die Patenterteilung: **01.05.2024**
(21) Anmeldenummer: 19161188.8
(22) Anmeldetag: 07.03.2019
(51) Int. Cl.: G06Q 10/08

(54) **AUTHENTIFIZIEREN AN SENDUNGSAUTOMATEN**
AUTHENTICATION TO DELIVERY LOCKERS
AUTHENTIFICATION AUX CASIERS DE LIVRAISON

(30) Priorität: 19.03.2018 DE 102018106352
(43) Veröffentlichungstag der Anmeldung: 25.09.2019
(73) Patentinhaber: Deutsche Post AG, 53113 Bonn (DE)
(72) Erfinder: DAUTZ, Christoph, 53225 Bonn (DE); MARKERT, Florian, 6800 Feldkirch (AT); VON GOSTOMSKI, Markus, 53127 Bonn (DE)
(74) Vertreter: Cohausz & Florack

(56) Entgegenhaltungen:
- DE-A1-102014 105 241
- US-A1- 2008 203 146
- US-A1- 2013 206 279
- US-A1- 2015 321 595
- US-A1- 2017 024 687
- US-A1- 2017 024 688
- US-A1- 2017 039 510
- US-A1- 2017 323 545
- Jack Erjavec ET AL: "Automotive Technology: A Systems Approach", 21. Februar 2014 (2014-02-21), Delmar Cengage Learning, XP055506654, ISBN: 978-1-133-61231-5 Seiten ToC,616-620,647-651,664-668, * Seite 665 - Seite 666 *
- Dobromir Todorov: "Mechanics of User Identification and Authentification", 18. Juni 2007 (2007-06-18), Auerbach Publications, Taylor & Francis Group, Boca Raton, FL, US, XP055245964, ISBN: 978-1-4200-5219-0 Seite ToC, Ch01, * Seiten 13, 18 - Seite 19 *
- Wikipedia: "Authentication", INTERNET ARTICLE, 2. März 2018 (2018-03-02), XP055579573, Gefunden im Internet: URL:https://en.wikipedia.org/w/index.php?t itle=Authentication&oldid=828364445 [gefunden am 2019-04-10]
- Tara M Swaminatha ET AL: "Wireless Security and Privacy: Best Practices and Design Techniques", 1 August 2002 (2002-08-01), Addison-Wesley, XP055767867, ISBN: 978-0-201-76034-7 pages Preface,22-23,
- Aaron E Earle: "Wireless Security Handbook", 16 December 2005 (2005-12-16), Auerbach Publications, XP055768104, ISBN: 978-0-8493-3378-1 page 281,
- Thilo Weichert: "Datenschutz im Auto. Das Kfz als grosses Smartphone mit Raedern. Teile 1 und 2", The Journal Academy of Sciences Engineering Medicine- STRASSENVERKEHRSRECHT 14.6&7, 12 March 2018 (2018-03-12), XP055693383, Retrieved from the Internet: URL:https://trid.trb.org/view/1322215 [retrieved on 2020-05-11]

## Beschreibung

### GEBIET DER ERFINDUNG

Die vorliegende Erfindung betrifft unter anderem Verfahren und Vorrichtungen, welche im Rahmen eines Be- und/oder Entladen eines Sendungsautomaten bzw. der Vorbereitung hiervon, insbesondere bei der Authentifizierung an dem Sendungsautomaten, Verwendung finden.

### HINTERGRUND DER ERFINDUNG

Sendungen, wie etwa Kleingutsendungen (beispielsweise Pakete), welche an bestimmte Personen adressiert sind, werden in der Regel persönlich an hierfür berechtigte Personen übergeben, was unter Umständen beispielsweise auch eine andere Person des Haushalts oder ein Nachbar sein kann, um sicherzustellen, dass die Sendungen nicht in unbefugte Hände gelangen. Es besteht allerdings die Möglichkeit, dass der Adressat oder eine zur Entgegennahme berechtigte Person nicht angetroffen wird, so dass die Übergabe nicht bewirkt werden kann und ein weiterer Übergabeversuch am selben oder einem anderen Ort erfolgen muss. Das erhöht den logistischen Aufwand erheblich und kann dazu führen, dass der Adressat der Sendung oder die zur Entgegennahme berechtigte Person erst recht spät in den Besitz der Sendung gelangt. Holt der Adressat der Sendung oder die zur Entgegennahme der Sendung berechtigte Person die Sendung an einer Sammelstelle, etwa einer Filiale eines die Sendung transportierenden Unternehmens, ab, ist auch dies oft zeitintensiv und mühsam. Dies gilt insbesondere bei einer persönlichen Übergabe der Sendung, da dann oft noch Wartezeit anfällt, bis der Adressat der Sendung oder die zur Entgegennahme derselben berechtigte Person die Sendung entgegennehmen kann.

Aus diesem Grund können die Sendungen auf Wunsch in Sendungsautomaten, beispielsweise in Packstationen, hinterlegt werden. Diese kann beispielsweise Lagereinheiten, insbesondere Schließfächer aufweisen und die Sendungen können zu einem späteren bzw. beliebigen Zeitpunkt von der berechtigten Person mit einer Zugangskarte, einem Code oder anderweitig geöffnet werden, um die Sendung aus der entsprechenden Lagereinheit zu entnehmen. Derartige Sendungsautomaten können gleichfalls zum Versenden von Sendungen verwendet werden, indem ein Kunde eine zu versendende Sendung in einer Lagereinheit bzw. einem Schließfach des Sendungsautoamten hinterlegt wird.

Die Sendungsautomaten müssen jedoch seitens des die Sendung transportierenden und zustellenden Unternehmens auch mit der zuzustellenden Sendung beladen werden bzw. darin hinterlegte Sendungen müssen von dem Transportunternehmen aus dem Sendungsautomaten entnommen werden.

Aus dem Stand der Technik sind verschiedene Verfahren zum Be- und/oder Entladen von Sendungsautomaten, in welche Sendungen durch einen Zusteller eingeladen oder aus welchen Sendungen durch einen Zusteller ausgeladen werden müssen, bzw. zur Vorbereitung dieses Vorgangs in unterschiedlicher Ausgestaltung bekannt.

So ist es eine Möglichkeit, dass der Zusteller eine Identifikationskarte besitzt und zudem in Kenntnis einer (mit der Karte verknüpften) PIN ist. Erreicht der Zusteller sodann einen Sendungsautoamten, muss dieser zunächst seine Karte an dem Sendungsautomaten einstecken oder zumindest in einen Lesebereich halten, damit diese bzw. eine Identifikationsinformation hierauf elektronisch oder optisch erfasst werden kann. Anschließend wird der Zusteller aufgefordert die PIN einzugeben. Schließlich kann der Zusteller Sendungen in den Sendungsautoamten laden oder hieraus entnehmen.

Nachteilig an dem beschriebenen Verfahren ist zum einen, dass dieses vergleichsweise zeitaufwendig ist und der Zusteller bereits durch den zweischrittigen Authentifizierungsvorgang wertvolle Zeit verliert. Zwar wäre es denkbar, die Authentifizierung des Zustellers beispielsweise nur auf die Verwendung der Identifikationskarte oder der PIN zu reduzieren. Dies würde jedoch zu Lasten der Sicherheit gehen.

Doch selbst mit dem beschriebenen zweischrittigen Authentifizierungsvorgang ist das Verfahren in sicherheitstechnischer Hinsicht weiterhin verbesserungsbedürftig. So kann beispielsweise die Identifikationskarte leicht verloren gehen oder durch den Zusteller am Sendungsautomaten liegen gelassen werden. Dies ist insbesondere dann kritisch, sollte ein Zusteller zudem seine PIN auf der Identifikationskarte oder auf einem Zettel an der Karte notieren.

Ein Erhöhen der Sicherheit wäre zwar denkbar, indem weitere Authentifizierungsschritte für den Zusteller vorgesehen werden. Dies würde dann aber wiederum Zeit in Anspruch nehmen und sich nachteilig auf die Geschwindigkeit des Verfahrens auswirken.

US 2017/024687 A1 beschreibt ein Verfahren, bei dem eine personenbezogene Sendung durch eine Übergabeeinrichtung an ein mit der personenbezogenen Sendung verknüpfte Fahrzeug übergeben wird, so dass der Abholer die personenbezogene Sendung aus dem Fahrzeug entgegennehmen kann und/oder in das mit der personenbezogenen Sendung verknüpfte Fahrzeug, insbesondere in den Innenraum, auf eine Ladefläche und/oder einen Kofferraum des Fahrzeugs (5), übergeben wird.

US 2015/321595 A1 beschreibt ein Verfahren zum Abliefern und/oder Abholen von wenigstens einer Sendung. Um den damit verbundenen Aufwand zu verringern wird vorgeschlagen, dass ein Fahrzeug wenigstens einen Aufnahmebehälter über den öffentlichen Straßenverkehr anfährt und dass die wenigstens eine abzuliefernde Sendung durch eine mit dem Fahrzeug verbundene Übergabeeinrichtung vom Fahrzeug in den Aufnahmebehälter eingebracht wird und/oder die wenigstens eine abzuholende Sendung durch die mit dem Fahrzeug verbundene Übergabeeinrichtung aus dem Aufnahmebehälter zum Fahrzeug verbracht wird.

"Automotive Technology: A Systems Approach", Jack Erjavec ETAL, 21. Februar 2014 beschreibt die Verwendung von Funkschlüsseln für Fahrzeuge.

US 2008/203146 A1 beschreibt ein Pumpensurrogat-Steuerungssystem und -verfahren, das es mehreren Verkaufsstellensystemen ermöglicht, ein bestimmtes Servicesystem zu steuern.

US 2013/206279 A1 beschreibt eine Flüssigkeitsabgabedüse zur drahtlosen Kommunikation entweder mit einer aktiven oder einer passiven Vorrichtung, die sich an einem Fahrzeug befindet, und zur drahtlosen Kommunikation von der Flüssigkeitsabgabedüse zu einer zentralen Stelle zur Speicherung von Fahrzeugdaten.

US 2017/024688 A1 beschreibt ein Verfahren zum autonomen Abliefern und/oder Abholen wenigstens einer Sendung mit wenigstens einem Verteilerfahrzeug, bei dem das Verteilerfahrzeug bei geöffneter Verschlusseinheit wenigstens teilweise autonom eine Sendung in das Kundenfahrzeug verbringt und/oder wenigstens teilweise autonom eine Sendung aus dem Kundenfahrzeug entnimmt.

DE 10 2014 105241 A1 beschreibt eine Verriegelungseinheit für ein Paketkasten oder einen Paketbriefkasten zur Aufnahme von zuzustellenden Briefen und Paketen mit mindestens zwei Türen zum Verriegeln von jeweiligen Gehäuseöffnungen.

"Datenschutz im Auto. Das Kfz als grosses Smartphone mit Raedern. Teile 1 und 2",, Thilo Weichert, The Journal Academy of Sciences Engineering Medicine-Strassenverkehrsrecht 14.6&7, 12. März 2018 beschreibt den EInsatz von mobile Informationstechnik im Kraftfahrzeug.

Der vorliegenden Erfindung stellt sich daher die Aufgabe, den Vorgang des Be- und/oder Entladens eines Sendungsautomaten bzw. die Vorbereitung hiervon sowohl möglichst zeitsparend als auch möglichst sicher zu gestalten.

### ALLGEMEINE BESCHREIBUNG EINIGER BEISPIELHAFTER AUSFÜHRUNGSFORMEN DER ERFINDUNG

Gemäß einem ersten Aspekt wird ein Verfahren zum Be- und/oder Entladen eines Sendungsautomaten mit Sendungen durch einen Benutzer mit einem Fahrzeug oder zur Vorbereitung hiervon, gemäß Anspruch 1 beschrieben.

Unter einem Sendungsautomaten wird beispielsweise eine Paketstation, ein Paketautomat und/oder ein Paketkasten verstanden. Unter einer Paketstation wird im Allgemeinen eine (zumindest teilweise automatisierte) Abholstelle und/oder Ablieferstelle für Paketsendungen, wie beispielsweise ein Paketautomat oder ein Paketkasten, verstanden. Unter einem Paketautomaten wird beispielsweise eine Packstation verstanden. Unter einem Paketkasten wird insbesondere ein (privater) Hausbriefkasten verstanden, über den der Kunde Päckchen und/oder Pakete empfangen und/oder aufgeben kann. Der Sendungsautomat kann daher insbesondere den Empfang und/oder die Aufgabe von Paketen und Päckchen für einen Kunden ermöglichen.

Der Sendungsautomat kann beispielsweise ein oder mehrere (insbesondere eine Vielzahl von) Lagereinheiten (zum Beispiel Schließfächer) aufweisen. Eine Lagereinheit kann beispielsweise eine Sendung aufnehmen. Das Öffnen einer Lagereinheit ist im Rahmen eines Vorgangs beispielsweise nur durch den Benutzer (Zusteller) und den jeweiligen Empfänger bzw. Versender möglich.

Unter einer Sendung wird vorliegend bevorzugt eine Kleingutsendung verstanden. Eine Kleingutsendung ist beispielsweise eine Büchersendung, ein Päckchen, ein Paket oder eine Warensendung. Ebenfalls kann eine Sendung jedoch auch eine Sperrgutsendung sein. Kleingutsendungen und Sperrgutsendungen passen normalerweise nicht in übliche Hausbriefkästen und müssen daher regelmäßig etwa mittels beschriebener Sendungsautomaten zugestellt oder abgeholt werden.

Nichtsdestotrotz kann die Sendung jedoch ebenfalls eine Briefsendung, beispielsweise ein Brief oder eine Postkarte sein.

Der Benutzer ist vorliegend ein Zusteller, das heißt insbesondere ein für das die Sendung transportierende Transportunternehmen tätiger Beschäftigter. Auch wenn der Zusteller nicht nur zuzustellenden Sendungen in den Sendungsautomaten lädt, sondern zudem zu versendende Sendungen aus dem Sendungsautomaten entlädt, wird vorliegend stets der Begriff Zusteller verwendet. Der Benutzer ist insbesondere gleichzeitig Fahrer oder Mitfahrer des Fahrzeugs.

Das Fahrzeug kann ebenfalls für ein autonomes Fahren ausgebildet sein bzw. autonom fahren. Dabei kann der Benutzer in dem Fahrzeug anwesend sein, ohne jedoch das Fahrzeug führen zu müssen. Alternativ ist es aber ebenfalls möglich, dass der Benutzer nicht im Fahrzeug anwesend ist oder mitfährt.

Der Sendungsautomat kann daneben auch von den Kunden, das heißt den Personen, an die die jeweiligen Sendungen adressiert sind (Empfänger), bzw. die eine Sendung versenden wollen (Versender), benutzt werden.

Ein Beladen des Sendungsautomaten ist durch den Benutzer (Zusteller) erforderlich, wenn eine Sendung in den Sendungsautomaten hinterlegt werden soll, die mittels des Sendungsautomaten an einen Empfänger zugestellt werden soll. Ein Entladen des Sendungsautomaten ist durch den Benutzer (Zusteller) erforderlich, wenn eine Sendung aus dem Sendungsautomaten entnommen werden soll, die mittels des Sendungsautomaten durch einen Versender versandt werden soll.

Das Fahrzeug ist insbesondere dazu ausgebildet eine Vielzahl von entsprechenden Sendungen transportieren zu können (Zustellerfahrzeug). Beispielsweise ist das Fahrzeug ein Güterfahrzeug, insbesondere ein Lieferwagen. Beispielsweise ist das Fahrzeug ein Kraftfahrzeug. Beispielsweise ist das Fahrzeug ein teilweise oder vollständig elektrisch angetriebenes Fahrzeug (Elektrofahrzeug).

Durch das Authentifizieren des Benutzers (Zustellers) an dem Fahrzeug kann zunächst sichergestellt werden, dass eine berechtigte Person das Fahrzeug zum Zwecke der Be- und/oder Entladung eines Sendungsautomaten verwendet. Beispielsweise ist ein Starten des Fahrzeugs ohne die Authentifizierung nicht möglich. Beispielsweise ist die Authentifizierung des Benutzers am Fahrzeug eine vom Starten des Fahrzeugs unabhängige Aktion und kann zum Beispiel vor oder nach dem Starten erfolgen. Beispielsweis ist eine Authentifizierung beispielsweise im Rahmen einer Zustelltour oder im Verlauf eines Tages typischerweise nur einmal notwendig. Beispielsweise authentifiziert sich der Benutzer (einmalig) zu Beginn seiner Zustelltour. Das Authentifizieren kann dabei eine Aktion des Benutzer, des Fahrzeugs oder von beiden umfassen. So kann das Authentifizieren beispielsweise umfassen, dass der Benutzer eine Authentifizierungsinformation bereithält. Das Authentifizieren umfasst, dass das Fahrzeug eine Authentifizierungsinformation (vom Benutzer) erhält. Beispielsweise werden durch die Authentifizierung des Benutzers am Fahrzeug Zusteller und Fahrzeug miteinander assoziiert.

Beispielsweise erfolgt das Authentifizieren mittels eines Gegenstandes des Benutzers, welcher entsprechende Authentifizierungsinformationen trägt oder speichert, einem Wissen des Benutzers oder einer Eigenschaft des Benutzers. Beispiele für Gegenstände des Benutzers sind ein (physischer) personalisierter Zündschlüssel oder ein Identifikationsausweis (beispielsweise ein Mitarbeiterausweis) des Benutzers. Dabei kann das Authentifizieren mit einer tragbaren elektronischen Vorrichtung, beispielsweise einem Radio Frequency Identification Tag (RFID-Tag), insbesondere einem Near Field Communication Tag (NFC-Tag), aber auch einer Karte, auf der entsprechende Authentifizierungsinformationen gespeichert sind, etwa in einem Chip oder einem Magnetstreifen, erfolgen. Alternativ oder zusätzlich ist es möglich, dass das Authentifizieren mit einem optisch auslesbaren Code, beispielsweise Barcode, insbesondere zweidimensionalem Barcode, erfolgt, der von dem Fahrzeug (bzw. einer hiermit verbundenen oder darin integrierten Einrichtung) ausgelesen werden kann. Beispielhaft für ein Wissen des Benutzers ist ein Passwort, eine PIN oder eine Antwort auf eine Sicherheitsfrage. Das Authentifizieren erfolgt dann beispielsweise an einem Eingabefeld oder einem Interface des Fahrzeugs durch den Benutzer. Ein Beispiel für eine Eigenschaft des Benutzers, anhand der die Authentifizierung erfolgen kann, ist beispielsweise ein biometrisches Merkmal des Benutzers, beispielsweise der Fingerabdruck, das Gesicht, ein Verhalten, die Stimme oder die Iris.

In jeden Fall kann das Fahrzeug oder eine entsprechende als Teil des Fahrzeugs anzusehenden Vorrichtung entsprechende Mittel aufweisen, um eine entsprechende Authentifizierung durchzuführen.

Ist das Fahrzeug in Kommunikationsreichweite zur Kommunikation mit dem Sendungsautomaten verbracht, können das Fahrzeug und der Sendungsautomat gegenseitig gesendete Signale empfangen und insbesondere eine Kommunikationsverbindung aufbauen. Die Kommunikation zwischen Fahrzeug und Sendungsautomat erfolgt dabei insbesondere basierend auf einer lokalen Funktechnik, wie beispielsweise gemäß der Radio Frequency Identification (RFID) Technik, gemäß dem Near Field Communication (NFC) Standard, gemäß dem Bluetooth (Bluetooth LE) Standard und/oder gemäß einem Wireless Local Area Network (WLAN), beispielsweise dem gemäß dem IEEE-802.11-Standard. Hierzu können das Fahrzeug und der Sendungsautomat jeweils entsprechende Kommunikationsschnittstellen zum Senden und/oder Empfangen von entsprechenden Signalen aufweisen. Das Verbringen des Fahrzeugs in Kommunikationsreichweite mit dem Sendungsautomaten erfolgt typischerweise im Rahmen des Anfahrens eines entsprechenden Sendungsautomaten.

Befinden sich Fahrzeug und Sendungsautomat in Kommunikationsreichweite, kann ein Authentifizieren des Fahrzeugs an dem Sendungsautomaten erfolgen. Auch in diesem Fall kann das Authentifizieren dabei eine Aktion des Fahrzeugs, des Sendungsautomaten oder von beiden umfassen. So umfasst das Authentifizieren, dass das Fahrzeug eine Authentifizierungsinformation bereithält. Das Authentifizieren umfasst, dass der Sendungsautomat eine Authentifizierungsinformation (vom Fahrzeug) erhält.

Mit der Authentifizierung oder zur Authentifizierung wird beispielsweise eine sichere, das heißt insbesondere verschlüsselte Verbindung zwischen dem Fahrzeug und dem Sendungsautomaten aufgebaut. Beispielswiese umfasst das Authentifizieren das (verschlüsselte) Übermitteln einer Nonce. Beispielsweise wird ein Challenge-Response-Verfahren verwendet, wie im Folgenden noch weiter beschrieben wird.

Durch die Authentifizierung des Fahrzeugs an dem Sendungsautomaten kann erreicht werden, dass insbesondere durch den Benutzer durchzuführende Aktionen und Schritte am Sendungsautoamten eingespart werden können, wie beispielsweise die eingangs beschriebene manuelle Verwendung einer Identifikationskarte durch den Benutzer am Sendungsautomaten. Dies hat jedoch nicht nur eine vorteilhafte Zeitersparnis zur Folge, sondern zudem sicherheitsrelevante Auswirkungen. Denn bei einem Fahrzeug existiert die Gefahr eines Verlierens, wie sie bei einer an jedem Sendungsautoamten einzusetzenden Identifikationskarte besteht, nicht. Auch kann die eingangs beschriebene Problematik von auf der Identifikationskarte vermerkten PIN vorteilhaft umgangen werden.

Somit kann das Fahrzeug als (Hardware)-Token angesehen werden, welcher der Authentifizierung an dem Sendungsautomaten dient. Ein besonders vorteilhafter Aspekt ist dabei, dass es sich bei dem verwendeten Fahrzeug nicht um einen beliebigen Hardware-Token handelt. Denn der Benutzer musste sich zunächst selbst am Fahrzeug authentifizieren, bevor eine entsprechende Authentifizierung des Fahrzeugs an dem Sendungsautomaten möglich ist. Man kann Fahrzeug und Benutzer daher als eine logische Einheit betrachten, von der sich dann lediglich das Fahrzeug an dem Sendungsautomaten authentifizieren zu braucht. Anders ausgedrückt, wird durch das Authentifizieren des Fahrzeugs an dem Sendungsautomaten aufgrund der Tatsache, dass sich der Benutzer zunächst am Fahrzeug authentifiziert hat, insbesondere auch der Benutzer indirekt oder implizit an dem Sendungsautomaten authentifiziert.

Das Authentifizieren des Fahrzeugs an dem Sendungsautomaten stellt dabei einen Faktor einer Mehr-Faktor-Authentifizierung (beispielsweise Zwei-Faktor-Authentifizierung) dar.

Weiterhin kann eine optionale (explizite) Authentifizierung des Benutzers an dem Sendungsautomaten erfolgen. Die Authentifizierung des Benutzers kann beispielsweise erfolgen, wie bereits in Zusammenhang mit der Authentifizierung des Benutzers am Fahrzeug beschrieben, worauf hier verwiesen wird, das heißt also insbesondere mittels eines Gegenstandes, einem Wissen oder einer Eigenschaft des Benutzers. Wie ebenfalls bereits beschrieben kann das Authentifizieren dabei eine Aktion des Benutzer, des Sendungsautomaten oder von beiden umfassen. So kann das Authentifizieren beispielsweise umfassen, dass der Benutzer eine Authentifizierungsinformation bereithält. Das Authentifizieren kann beispielsweise umfassen, dass der Sendungsautomat eine Authentifizierungsinformation (vom Benutzer) erhält. Das Authentifizieren des Benutzers an dem Sendungsautomaten kann dabei einen Faktor einer Mehr-Faktor-Authentifizierung (beispielsweise Zwei-Faktor-Authentifizierung) darstellen.

Auf die Authentifizierung des Benutzers an dem Sendungsautomaten kann insbesondere dann verzichtet werden, wenn es sich bei dem Fahrzeug um ein autonomes Fahrzeug handelt und der Benutzer nicht im Fahrzeug anwesend ist.

Im Ergebnis kann so ein im Vergleich zum Stand der Technik schnelleres und gleichzeitig sichereres Verfahren zum Be- und/oder Entladen eines Sendungsautomaten bzw. zur Vorbereitung hiervon angegeben werden.

Gemäß einem zweiten Aspekt wird zudem eine Vorrichtung beschrieben, eingerichtet zur Ausführung oder umfassend Mittel zur Ausführung des Verfahrens nach dem ersten Aspekt. Die Vorrichtung kann dabei insbesondere der Sendungsautomat oder ein Teil hiervon sein.

Gemäß einem dritten Aspekt wird zudem ein System beschrieben umfassend:
- einen Sendungsautomaten und
- ein Fahrzeug,
wobei das System zur Ausführung des Verfahrens nach dem ersten Aspekt eingerichtet ist oder entsprechende Mittel umfasst.

Beispielsweise umfasst eine entsprechende Vorrichtung (das heißt insbesondere der Sendungsautomat und/oder das Fahrzeug) zumindest einen Prozessor und zumindest einen Speicher, wobei in dem Speicher ein Programm umfassend Programmanweisungen gespeichert ist, wobei der Speicher und das Programm eingerichtet sind, um, mit dem Prozessor, die Vorrichtung zumindest zu veranlassen, eines oder mehrere der beispielhaften Verfahren gemäß dem ersten Aspekten auszuführen, wenn das Programm auf dem Prozessor ausgeführt wird. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung ist etwa softwaremäßig und/oder hardwaremäßig eingerichtet ist, um einzelne oder alle Schritte eines beispielhaften Verfahrens gemäß dem ersten Aspekt ausführen zu können.

Gemäß einem vierten Aspekt wird zudem ein Computerprogrammprodukt beschrieben, umfassend Programmanweisungen, um ein Verfahren nach dem ersten Aspekt auszuführen, wenn das Programm auf einem Prozessor ausgeführt wird.

Ein beispielhaftes Programm gemäß der Erfindung kann in oder auf einem computerlesbaren Speichermedium gespeichert sein, welches eines oder mehrere beispielhafte Programme enthält und z.B. als magnetisches, elektrisches, elektromagnetisches, optisches und/oder andersartiges Speichermedium ausgebildet ist. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nichtflüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß einer beispielhaften Ausgestaltung der Aspekte erfolgt das Authentifizieren des Benutzers an dem Sendungsautomaten mittels einer vom Fahrzeug unabhängigen Authentifizierungsmethode. Hierdurch kann die Sicherheit des Verfahrens weiter erhöht werden. Denn der Besitz des Fahrzeugs (an dem sich der Benutzer beispielsweise bereits authentifiziert hat) ist dann beispielsweise nicht ausreichend, um eine vollständigem Zugriff auf den Sendungsautomaten zu erhalten. Wie bereits ausgeführt, während das Fahrzeug als ein Faktor einer Mehr-Faktor-Authentifizierung angesehen werden kann, kann das Authentifizieren des Benutzers an dem Sendungsautomaten insbesondere als ein weiterer (zum Beispiel zweiter) Faktor einer Mehr-Faktor-Authentifizierungsmethode (zum Beispiel einer zwei Faktor-Authentifizierung) angesehen werden. Wie ebenfalls bereits ausgeführt, kann die Authentifizierungsmethode unterschiedlich ausgestaltet sein und beispielsweise das Eingeben einer PIN an dem Sendungsautomaten durch den Benutzer umfassen.

Zur Authentifizierung des Benutzers werden an dem Fahrzeug Authentifizierungsinformationen des Benutzers an dem Fahrzeug erhalten. Zur Authentifizierung des Fahrzeugs an dem Sendungsautomaten werden Authentifizierungsinformationen des Fahrzeugs an dem Sendungsautomaten erhalten. Zur Authentifizierung des Benutzers an dem Sendungsautomaten können Authentifizierungsinformationen des Benutzers an dem Sendungsautomaten erhalten.

Dementsprechend werden zur Authentifizierung des Benutzers an dem Fahrzeug Authentifizierungsinformationen vom Benutzer an das Fahrzeug bereitgestellt; und zur Authentifizierung des Fahrzeugs an dem Sendungsautomaten werden Authentifizierungsinformationen vom Fahrzeug an den Sendungsautomaten bereitgestellt. Zur Authentifizierung des Benutzers an dem Sendungsautomaten können Authentifizierungsinformationen vom Benutzer an den Sendungsautomaten bereitgestellt werden.

Authentifizierungsinformationen können dabei abhängig von dem jeweiligen verwendeten Authentifizierungsverfahren sein. Die jeweiligen Authentifizierungsinformationen können für das jeweilige Authentifizierungsverfahren geeignete Authentifizierungsinformationen sein. Authentifizierungsinformationen können beispielsweise ein Passwort, einen digitalen Schlüssel und/oder ein digitales Zertifikat umfassen.

Die durch das Fahrzeug an den Sendungsautomaten bereitgestellten und von diesem erhaltenen Authentifizierungsinformationen basieren zumindest teilweise auf den am Fahrzeug erhaltenen Authentifizierungsinformationen des Benutzers. Das heißt, die Authentifizierungsinformationen des Fahrzeugs können von den Authentifizierungsinformationen des Benutzers abhängen, beispielsweise auf deren Basis generiert werden oder diese umfassen.

Gemäß einer weiteren beispielhaften Ausgestaltung der Aspekte umfasst das Authentifizieren des Benutzers an dem Fahrzeug, das Authentifizieren des Fahrzeugs an dem Sendungsautomaten und/oder das Authentifizieren des Benutzers an dem Sendungsautomaten ein Challenge-Response-Verfahren. Die jeweilige Authentifizierung kann insofern als Challenge-Response-Authentifizierung angesehen werden. Unter einer Challenge-Response-Authentifizierung wird dabei insbesondere ein sicheres Authentifizierungsverfahren verstanden, bei dem die eine Seite eine entsprechende Challenge überträgt und die andere Seite eine Response überträgt und dabei beweist, dass sie eine bestimmte Information kennt, jedoch insbesondere ohne diese Information selber zu übertragen. Beispielsweise umfasst das Challenge-Response-Verfahren die Übermittlung einer Nonce. Beispielsweise basiert das Challenge-Response-Verfahren auf der Verwendung einer Hashfunktion.

Gemäß einer weiteren beispielhaften Ausgestaltung der Aspekte erfolgt die Authentifizierung des Fahrzeugs an dem Sendungsautomaten ausschließlich und/oder automatisch, wenn sich das Fahrzeug in Kommunikationsreichweite mit und/oder näher als eine vorgegebene räumliche Entfernung an dem Sendungsautomaten befindet.

Befindet sich das Fahrzeug in Kommunikationsreichweite mit und/oder näher als eine vorgegebene räumliche Entfernung an einem Sendungsautomaten, gilt dies typischerweise auch andersherum, das heißt der Sendungsautomat ist dann in Kommunikationsreichweite des Fahrzeugs und/oder näher als eine vorgegebene räumliche Entfernung an dem Fahrzeug. Ein Sendungsautomat befindet sich beispielsweise in Kommunikationsreichweite des Fahrzeugs, wenn ein Erreichbarkeitstest von dem Fahrzeug an den Sendungsautomaten (und/oder andersherum) erfolgreich ist. Ein Erreichbarkeitstest ist beispielsweise eine Ping-Anfrage. Ist der Erreichbarkeitstest erfolgreich, kann davon ausgegangen werden, dass eine Kommunikationsverbindung aufgebaut werden kann und insbesondere eine Authentifizierung durchgeführt werden kann. Eine räumliche Entfernung von dem Fahrzeug zu dem Sendungsautomaten kann beispielsweise dadurch ermittelt werden, dass die aktuelle räumliche Position des Fahrzeugs bekannt ist (beispielsweise basierend auf einem Satellitennavigationssystem oder aus anderer Quelle) und zudem die räumliche Positionen des Sendungsautomaten bekannt sind und ein Vergleich dieser Positionen erfolgt. Ebenfalls kann die räumliche Entfernung mittels der Round-Trip-Time oder Round-Trip-Delay von zwischen Fahrzeug und Sendungsautomat ausgetauschten Nachrichten oder Daten-Paketen ermittelt werden. So kann die räumliche Entfernung auch mithilfe des Erreichbarkeitstests ermittelt werden, indem die Ping-Zeit oder Ping-Dauer gemessen wird. Die räumliche Entfernung kann dabei beispielsweise die direkte Entfernung (Luftlinie) sein. Alternativ kann unter der räumlichen Entfernung jedoch beispielsweise auch die Entfernung verstanden werden, die im entsprechenden Verkehrsnetz zurückgelegt werden muss. Eine vorgegebene räumliche Entfernung ist beispielsweise 1km, 500m, 100m oder 50m, sodass eine Authentifizierung nur dann erfolgt, wenn sich das Fahrzeug näher als diese Entfernung an dem Sendungsautomaten befindet.

Weitere Benutzeraktionen durch den Benutzer sind auf diese Weise nicht erforderlich. Vielmehr erfolgt ein automatisches Authentifizieren des Fahrzeugs an dem Sendungsautomaten, wenn der Benutzer den Sendungsautomaten mit dem Fahrzeug anfährt, was eine weitere Zeitersparnis ermöglicht.

Gemäß einer weiteren beispielhaften Ausgestaltung der Aspekte umfasst das Verfahren weiterhin:
- wiederholtes automatisches Überprüfen durch das Fahrzeug, ob ein Sendungsautomat in Kommunikationsreichweite und/oder näher als eine vorgegebene räumliche Entfernung ist; und
- Aufbauen einer Kommunikationsverbindung mit dem Sendungsautomaten, wenn das Überprüfen ergibt, dass der Sendungsautomat in Kommunikationsreichweite und/oder näher als eine vorgegebene räumliche Entfernung ist.

Wie bereits ausgeführt, kann das Überprüfen, ob ein Sendungsautomat in Kommunikationsreichweite und/oder näher als eine vorgegebene räumliche Entfernung ist, beispielsweise durch einen Vergleich der ermittelten bzw. bekannten räumlichen Positionen von Fahrzeug und Sendungsautomat ermittelt werden oder bevorzugt durch ein Messen der Round-Trip-Time oder des Round-Trip-Delays eines (vorzugsweise vom Fahrzeug ausgesendeten) Pings. Das Aufbauen der Kommunikationsverbindung zwischen Fahrzeug und Sendungsautomat kann insbesondere das bereits beschriebene Authentifizieren umfassen oder hieraus bestehen.

Gemäß einer weiteren beispielhaften Ausgestaltung der Aspekte erfolgt durch das oder nach dem Authentifizieren des Fahrzeugs an dem Sendungsautomaten eine Anmeldung des Fahrzeugs an dem Sendungsautomaten und/oder erfolgt durch das oder nach dem Authentifizieren des Benutzers an dem Sendungsautomaten eine Anmeldung des Benutzers an dem Sendungsautomaten. Das Anmelden kann also durch das Authentifizieren erfolgen oder ein hiervon separate Schritte umfassen. Durch die Anmeldung kann der Benutzer beispielsweise bestimmte Dienste des Sendungsautomaten benutzen, insbesondere speziell für Zusteller (und nicht für Kunden) vorgesehene Dienste des Sendungsautomaten.

Da sich der Benutzer zu Beginn am Fahrzeug authentifiziert hat, kann, wie bereits ausgeführt, eine Anmeldung des Fahrzeugs an dem Sendungsautomaten auch implizit als eine Anmeldung des Benutzers angesehen werden. Es ist jedoch möglich, dass nach dieser (impliziten) Anmeldung des Benutzers noch eine weitere (explizite) Authentifizierung durch den Benutzer am Sendungsautomaten erfolgen muss.

Gemäß einer weiteren beispielhaften Ausgestaltung der Aspekte erfolgt das wiederholte automatische Überprüfen durch das Fahrzeug, ob ein Sendungsautomat in Kommunikationsreichweite und/oder näher als eine vorgegebene räumliche Entfernung ist, auch dann, wenn eine Authentifizierung des Fahrzeugs an einem Sendungsautomaten besteht. Auf diese Weise kann insbesondere schnell und ohne weitere Aktionen des Benutzers ermittelt werden, dass sich das Fahrzeug zu einem anderen (nun näher liegenden) Sendungsautomaten bewegt hat (beispielsweise weil die Ping-Zeit nun die kürzeste ist) und es kann eine entsprechende Authentifizierung des Fahrzeugs an dem nun nächstliegenden Sendungsautomaten erfolgen.

Gemäß einer weiteren beispielhaften Ausgestaltung der Aspekte wird die Authentifizierung des Fahrzeugs an dem Sendungsautomaten solange aufrechterhalten, wie sich das Fahrzeug in Kommunikationsreichweite zur Kommunikation mit dem Sendungsautomaten befindet und/oder eine Kommunikationsverbindung zwischen dem Sendungsautomaten und dem Fahrzeug besteht und/oder keine anderweitige Authentifizierung am Sendungsautomaten erfolgt. Dementsprechend kann die Authentifizierung des Fahrzeugs an dem Sendungsautomaten aufgehoben werden, wenn sich das Fahrzeug außerhalb der Kommunikationsreichweite zur Kommunikation mit dem Sendungsautomaten befindet und/oder eine Kommunikationsverbindung zwischen dem Sendungsautomaten und dem Fahrzeug unterbrochen ist und/oder eine anderweitige Authentifizierung am Sendungsautomaten erfolgt. Eine anderweitige Authentifizierung kann beispielsweise eine Authentifizierung durch einen anderen Benutzer (Zusteller) oder durch einen Kunden sein. Dies trägt weiterhin dazu bei, den Vorgang des Be- und/oder Entladens eines Sendungsautomaten bzw. die Vorbereitung hiervon für den Benutzer sowohl möglichst zeitsparend als auch sicher zu gestalten.

Gemäß einer weiteren beispielhaften Ausgestaltung der Aspekte erfolgt für den Fall, dass sich mehrere Sendungsautomaten in Kommunikationsreichweite mit dem Fahrzeug befinden, ein Authentifizieren des Fahrzeugs vorzugsweise an demjenigen Sendungsautomaten, welcher räumlich am nächsten gelegen ist. Typischerweise ist ein Be- und/oder entladen desjenigen Sendungsautomaten erwünscht, welcher sich räumlich am nächsten zu dem Fahrzeug befindet. Dadurch, dass die Authentifizierung am entsprechenden Sendungsautomaten erfolgt, kann der Benutzer weiterhin Zeit einsparen, da auf diese Weise typischerweise eine Authentifizierung des Fahrzeugs am erwünschten Sendungsautomaten erfolgt.

Das Verfahren umfasst weiterhin:
- Erfassen, an dem Sendungsautomaten, einer Anwesenheit des Benutzers an dem Sendungsautomaten zur Ausübung einer Belade- und/oder Entladetätigkeit; und
- Aktivieren eines Zusteller-Betriebsmodus des Sendungsautomaten.

Der Benutzer (Zusteller) kann in der Regel auf andere Dienste oder Funktionen des Sendungsautomaten zugreifen als ein Kunde. Um zu vermeiden, dass beispielsweise ein sich gerade an dem Sendungsautomaten anwesender Kunde Zugriff auf diese für ihn nicht vorgesehenen Dienste oder Funktionen gelangt, weil sich das Fahrzeug des Benutzers (Zustellers) in der Anfahrt und in der Nähe befindet, wird erfasst, ob der Benutzer überhaupt anwesend ist. Erst dann wird ein Zusteller-Betriebsmodus aktiviert. Der Zusteller-Betriebsmodus umfasst, wie ausgeführt, beispielsweise weitere Dienste oder Funktionen, die nicht für den Kunden vorgesehen sind und auf die ein Kunde normalerweise keinen Zugriff hat. Der Zusteller-Betriebsmodus zeichnet sich beispielsweise dadurch aus, dass eben dieser Zugriff auf die Dienste oder Funktionen möglich ist. Beispielsweise umfasst der Zusteller-Betriebsmodus auch eine andere graphische Benutzeroberfläche (sofern der Sendungsautomat über eine entsprechende graphische Benutzerschnittstelle verfügt).

Das Erfassen der Anwesenheit des Benutzers erfolgt durch eine spezifische Interaktion des Benutzers mit einer Benutzerschnittstelle des Sendungsautomaten. Bei der Benutzerschnittstelle handelt es sich um ein Eingabegerät, wie ein Schalter oder auch um eine kombiniertes Eingabe/Ausgabe-Gerät, beispielsweise um einen Touch-Screen. Dabei ist das Eingabegerät in einer Alternative vorteilhaft auch das Eingabegerät, welches von den Kunden verwendet wird. Die spezifische Interaktion ist dabei eine nicht offensichtliche Aktion. In einer Alternative ist bereits die Benutzerschnittstelle verdeckt oder nicht leicht zu erkennen. Für den Fall, dass es sich bei der Benutzerschnittstelle beispielsweise um den auch von den Kunden verwendeten Touch-Screen handelt, kann es sich etwa um ein Betätigen eines nicht offensichtlich als zu betätigendes graphisches Benutzerelements handeln.

Gemäß einer weiteren beispielhaften Ausgestaltung der Aspekte erfolgt das Authentifizieren des Benutzers an dem Sendungsautomaten im Zusteller-Betriebsmodus. Beispielsweise kann das Authentifizieren des Benutzers an dem Sendungsautomaten ausschließlich im Zusteller-Betriebsmodus erfolgen. Der Benutzer muss beispielsweise zunächst den Zusteller-Betriebsmodus aktivieren, beispielsweise mittels einer oben beschriebenen spezifischen Interaktion, bevor ein Authentifizieren des Benutzers an dem Sendungsautomaten erfolgen kann. Beispielsweise wir dem Benutzer erst nach Aktivieren des Zusteller-Betriebsmodus ein Benutzerelement zugänglich, über den der Benutzer entsprechende Authentifizierungsinformationen, beispielsweise eine PIN, eingeben kann.

Gemäß einer weiteren beispielhaften Ausgestaltung der Aspekte ist ein erneutes Authentifizieren des Benutzers und/oder des Fahrzeugs am Sendungsautomaten und/oder Anmelden des Benutzers und/oder des Fahrzeugs am Sendungsautomaten nicht erforderlich, solange die Kommunikation zwischen dem Fahrzeug und dem Sendungsautomaten nicht oder nicht länger als eine vorgegebene Zeitdauer unterbrochen wird. Die vorgegebene Zeitdauer liegt beispielsweise im Bereich von Sekunden oder Minuten. Hierdurch kann verhindert werden, dass beispielsweise kurzzeitige Verbindungsstörungen zu erneut durchzuführenden Authentifikationen und damit zum Zeitverlust für den Benutzer führen.

Das Verfahren umfasst weiterhin ein Laden von Sendungen in den Sendungsautomaten und/oder ein Laden von Sendungen aus dem Sendungsautomaten.

Gemäß einer weiteren beispielhaften Ausgestaltung der Aspekte umfasst das Verfahren weiterhin:
- Erfassen, an dem Sendungsautomaten, von Sendungsinformationen von in den oder aus dem Sendungsautomaten zu ladenden oder geladenen Sendungen.

Die Sendungsinformationen sind beispielsweise mit der jeweiligen (in den oder aus dem Sendungsautomaten zu ladenden) Sendung assoziierte Informationen. Beispielsweise umfassen die Sendungsinformationen eine Referenznummer, eine Sendungsnummer, Absenderinformationen und/oder Empfängerinformationen. Beispielsweise sind die Sendungsinformationen auf der jeweiligen Sendung (optisch) aufgebracht, beispielsweise mittels einer menschen- oder maschinenlesbaren Schrift (beispielsweise mittels eines Strich- oder Barcodes). Alternativ oder zusätzlich können die Sendungsinformationen auch elektronisch, beispielsweise mittels einer lokalen Funkverbindung, beispielsweise mittels RFID (etwa NFC)-Technikvon den Sendungen ausgelesen werden.

Zum Laden von Sendungen in den bzw. aus dem Sendungsautomaten, wird beispielsweise eine Lagereinheit des Sendungsautomaten geöffnet. Anschließend kann der Benutzer die Sendung in die Lagereinheit legen bzw. aus der Lagereinheit entnehmen. Anschließend wird die Lagereinheit wieder geschlossen.

Alternativ, insbesondere sofern es sich um ein autonomes Fahrzeug handelt, kann das Be- und/oder Entladen, das heißt das Laden von Sendungen in den Sendungsautomaten bzw. das Laden von Sendungen aus dem Sendungsautoamten auch automatisiert, das heißt durch das Fahrzeug und/oder den Sendungsautoamten, erfolgen. Dies kann beispielsweise mittels einer Verladeeinrichtung, beispielsweise umfassend einen Greifarm und/oder ein Förderband, erfolgen.

Der Benutzer ist ein Zusteller und das Fahrzeug ist ein Zustellfahrzeug. Wie bereits ausgeführt, ist das beschriebene Verfahren insbesondere für einen Zusteller mit einem Zustellerfahrzeug vorteilhaft, da der Zusteller durch das Verfahren ein Be- und/oder Entladen des Sendungsautomaten auf sichere und dennoch zeitsparende Weise durchführen kann.

Gemäß einer weiteren beispielhaften Ausgestaltung der Aspekte ist der Sendungsautomat eine Paketstation, ein Paketautomat und/oder ein Paketkasten. Wie bereits ausgeführt, ist eine Paketstation eine (zumindest teilweise automatisierte) Abholstelle und/oder Ablieferstelle für Paketsendungen, wie beispielsweise ein Paketautomat oder ein Paketkasten.

Die in dieser Beschreibung beschriebenen beispielhaften Ausgestaltungen der vorliegenden Erfindung sollen auch in allen Kombinationen miteinander offenbart verstanden werden. Insbesondere soll durch die Offenbarung eines Verfahrensschrittes auch entsprechende Mittel zur Durchführung des entsprechenden Verfahrensschrittes offenbart sein. Gleichfalls soll durch ein Mittel zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### KURZE BESCHREIBUNG DER ZEICHNUNGEN

- Fig. 1: ein Blockdiagramm eines Ausführungsbeispiels einer Vorrichtung, beispielhaft für erfindungsgemäße Vorrichtungen;
- Fig. 2a-c: ein Ausführungsbeispiel eines erfindungsgemäßen Systems aus einem Fahrzeug und einem Sendungsautomaten; und
- Fig. 3: ein Ablaufdiagramm eines Ausführungsbeispiels eines erfindungsgemäßen Verfahrens.

### DETAILLIERTE BESCHREIBUNG EINIGER BEISPIELHAFTER AUSFÜHRUNGSFORMEN DER ERFINDUNG

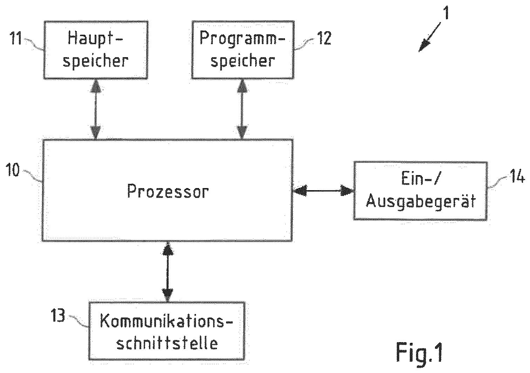

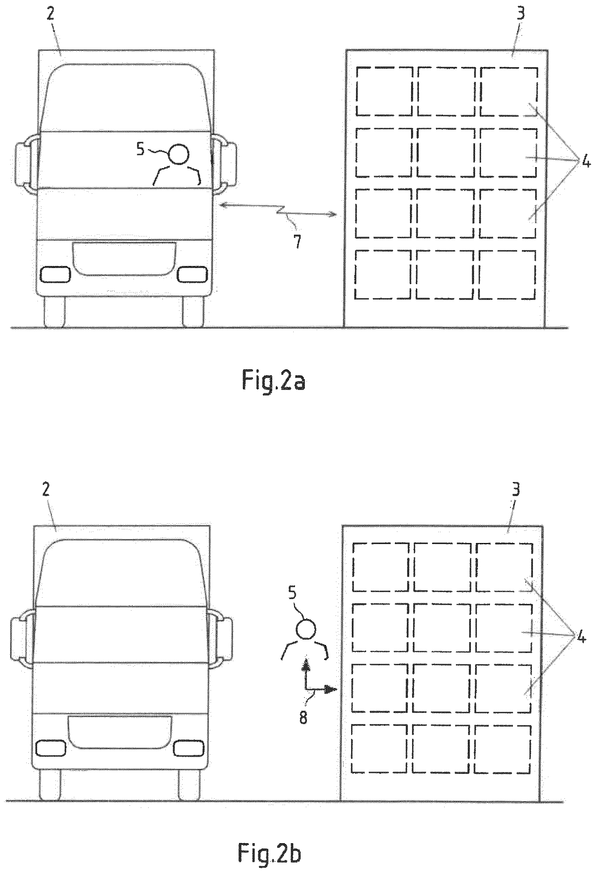

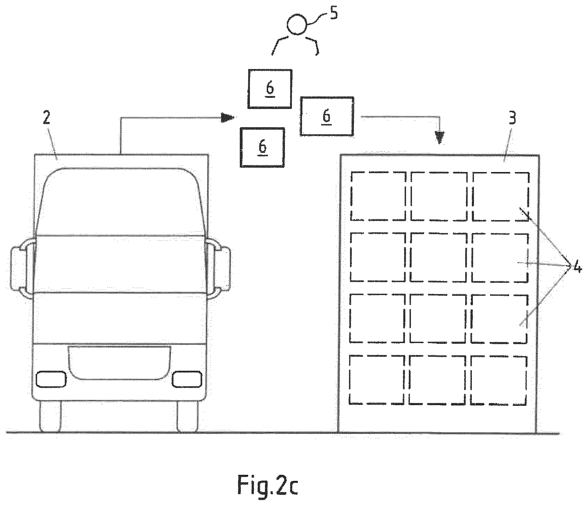

Fig. 1 zeigt zunächst ein Blockdiagramm einer beispielhaften Ausführungsform einer erfindungsgemäßen Vorrichtung 1, welche ein beispielhaftes Verfahren gemäß der Erfindung ausführen kann. Die gezeigte Vorrichtung kann insbesondere ein Modul oder Teil eines Fahrzeugs oder eines Sendungsautomaten sein, wie beispielsweise Fahrzeug 2 oder Sendungsautomat 3 aus Fig. 2). Beispielsweise ist die Vorrichtung 1 fest in ein Fahrzeug oder einen Sendungsautomaten integriert.

Prozessor 10 der Vorrichtung 1 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 10 führt Programmanweisungen aus, die in Programmspeicher 12 gespeichert sind, und speichert beispielsweise Zwischenergebnisse oder ähnliches in Arbeits- oder Hauptspeicher 11. Zum Beispiel ist Programmspeicher 120 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 11 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 12 ist vorzugsweise ein lokaler mit der Vorrichtung 1 fest verbundener Datenträger. Mit der Vorrichtung 1 fest verbundene Datenträger sind beispielsweise Festplatten, die in die Vorrichtung 1 eingebaut sind. Alternativ kann der Datenträger beispielsweise auch ein mit der Vorrichtung 1 trennbar verbindbarer Datenträger sein wie ein Speicher-Stick, ein Wechseldatenträger, eine tragbare Festplatte, eine CD, eine DVD und/oder eine Diskette.

Programmspeicher 12 enthält beispielsweise das Betriebssystem von der Vorrichtung 1, das beim Starten der Vorrichtung 1 zumindest teilweise in Hauptspeicher 11 geladen und vom Prozessor 10 ausgeführt wird. Insbesondere wird beim Starten von Vorrichtung 1 zumindest ein Teil des Kerns des Betriebssystems in den Hauptspeicher 11 geladen und von Prozessor 10 ausgeführt. Das Betriebssystem von Vorrichtung 1 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 1 zur Datenverarbeitung. Es verwaltet beispielsweise Betriebsmittel wie Hauptspeicher 11 und Programmspeicher 12, Netzwerkschnittstelle 13, Ein- und Ausgabegerät 14, stellt unter anderem durch Programmierschnittstellen anderen Programmen grundlegende Funktionen zur Verfügung und steuert die Ausführung von Programmen.

Prozessor 10 steuert die Kommunikationsschnittstelle 13, welche beispielsweise eine Netzwerkschnittstelle sein kann und als Netzwerkkarte, Netzwerkmodul und/oder Modem ausgebildet sein kann. Die Kommunikationsschnittstelle 13 ist insbesondere dazu eingerichtet, eine Verbindung der Vorrichtung 1 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 13 kann beispielsweise Daten (über das Kommunikationssystem) empfangen und an Prozessor 10 weiterleiten und/oder Daten von Prozessor 10 empfangen und (über das Kommunikationssystem) senden.

Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Kommunikationsschnittstelle 13 (etwa als Kommunikationsschnittstelle des Fahrzeugs 2 oder des Sendungsautomaten 3, vgl. Fig. 2) kann insbesondere dazu dienen, um Authentifizierungsinformationen, wie beschrieben, bereitzustellen und/oder zu erhalten.

Des Weiteren kann Prozessor 10 zumindest ein Ein-/Ausgabegerät 14 steuern. Ein-/Ausgabegerät 14 ist beispielsweise eine Tastatur, eine Maus, eine Anzeigeeinheit, ein Mikrofon, eine berührungsempfindliche Anzeigeeinheit (Touch-Screen), ein Lautsprecher, ein Lesegerät, ein Laufwerk und/oder eine Kamera. Ein-/Ausgabegerät 14 kann beispielsweise Eingaben eines Benutzers aufnehmen und an Prozessor 10 weiterleiten und/oder Informationen für den Benutzer von Prozessor 10 empfangen und ausgeben.

Auch Ein/-Ausgabegerät 13 (etwa als Ein-/Ausgabegerät des Fahrzeugs 2 oder des Sendungsautomaten 3, vgl. Fig. 2) kann insbesondere dazu dienen, um Authentifizierungsinformationen, wie beschrieben, bereitzustellen und/oder zu erhalten.

Fig. 2a - 2c zeigen nun ein Ausführungsbeispiel eines erfindungsgemäßen Systems aus einem Fahrzeug 2 und einem Sendungsautomaten 3. Ebenfalls ist ein Benutzer, hier ein Zusteller 5, welcher auch das Fahrzeug 2 fährt, dargestellt.

Das Fahrzeug 2 ist ein Zustellfahrzeug, welches eine Vielzahl von Sendungen transportieren kann. Das Zustellerfahrzeug 2 umfasst insbesondere zumindest eine Kommunikationsschnittstelle oder ein Eingabegerät, um Authentifizierungsinformationen von dem Zusteller 5 zu erhalten. Ebenfalls weist das Fahrzeug eine Kommunikationsschnittstelle auf, um Authentifizierungsinformationen an den Sendungsautomaten 3 zu senden.

Der Sendungsautomat 3 ist in diesem Fall als Packstation ausgebildet. Der Sendungsautomat umfasst eine Vielzahl von Lagereinheiten in Form von Schließfächern 4, in denen jeweilige Sendungen hinterlegt werden können. Der Sendungsautomat 3 weist zumindest eine Kommunikationsschnittstelle auf, um Authentifizierungsinformationen von dem Fahrzeug 2 zu empfangen. Weiterhin weist der Sendungsautomat 3 ein Ein-/Ausgabegerät auf, über das sowohl Kunden als auch der Zusteller 5 mit dem Sendungsautomaten interagieren können. Dabei ist der Sendungsautomat mittels des Ein-/Ausgabegeräts insbesondere dazu ausgebildet, um die Anwesenheit des Zustellers 5 zu erfassen und Authentifizierungsinformationen des Zustellers 5 zu erhalten.

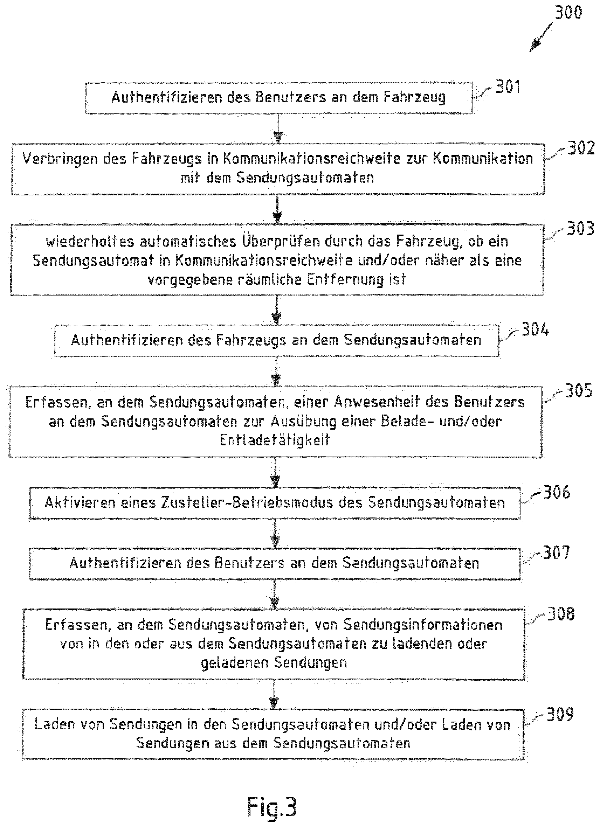

Das in den Fig. 2a-c dargestellte Belade-Verfahren des Sendungsautomaten 3 mit Paketen 6 (siehe Fig. 2c) wird nun in Zusammenhang mit Fig. 3 näher beschrieben. Fig. 3 zeigt dabei ein Ablaufdiagramm 300 eines Ausführungsbeispiels eines erfindungsgemäßen Verfahrens.

In einem ersten Schritt authentifiziert sich der Zusteller 5 an dem Fahrzeug, Aktion 301. So authentifiziert sich der Zusteller 5 beispielsweise zum Beginn seiner Zustelltour zur Identitätsfeststellung einmalig an dem Zustellerfahrzeug 2. Dies kann zum Beispiel über einen personalisierten Zündschlüssel oder das Einlesen des Mitarbeiterausweises an einem fest eingebauten Kartenleser erfolgen.

Anschließend beginnt der Zusteller 5 seine Zustelltour und verbringt das Fahrzeug 2 zu dem Sendungsautomaten 3 und kommt dabei schließlich in Kommunikationsreichweite des Sendungsautomaten 3, Aktion 302, wie auch in Fig. 2a dargestellt.

Dabei erfolgt ein wiederholtes, automatisches Überprüfen (mittels eines Ping-Verfahrens) durch das Fahrzeug 2, ob ein Sendungsautomat in Kommunikationsreichweite und/oder näher als eine vorgegebene räumliche Entfernung (beispielsweise 100m) ist, Aktion 303.

Kommt das Fahrzeug in die Nähe des Sendungsautomaten 3, wird eine Verbindung aufgebaut, beispielsweise über Bluetooth, (semiaktives) RFID oder WLAN, wie durch Pfeil 7 in Fig. 2a angedeutet. Es erfolgt ein Authentifizieren des Fahrzeugs 2 an dem Sendungsautomaten 3 über eine sichere Verbindung, Aktion 304. Über die Verbindung 7 bleibt der dem Fahrzeug 2 zugeordnete Zusteller 5, sofern sich das Fahrzeug 2 über ein hinreichend sicheres Authentifizierungsverfahren (z.B. eine verschlüsselte Übermittlung im Challenge-Response-Verfahren, wobei die Nonce ebenfalls verschlüsselt übermittelt wird) gegenüber dem Sendungsautomaten 3 erfolgreich authentifiziert hat, solange an dem Sendungsautomaten 3 angemeldet, wie eine (im Wesentlichen) ununterbrochene Verbindung besteht und kein anderer Benutzer sich am Sendungsautomaten authentifiziert bzw. anmeldet.

Jedenfalls wenn die Verbindung zwischen Fahrzeug und Sendungsautomat (dauerhaft) unterbrochen wird, wird erneut Überprüft, ob sich ein Sendungsautomat in Kommunikationsreichweite befindet bzw. näher als die vorgegebene räumliche Entfernung ist (Aktion 303).

Sollten mehrere Sendungsautomaten zeitgleich in Kommunikationsreichweiter bzw. näher als die vorgegebene räumliche Entfernung sein, wird stets mit dem nächstgelegene Sendungsautomat (beispielsweise feststellbar über die kleinste Ping-Zeit) eine Verbindung hergestellt.

Das Ping-Verfahren kann dabei auch bei bestehender Authentifizierung oder Anmeldung an einem Sendungsautomaten weiterhin durchgeführt werden.

Solange das Fahrzeug am Sendungsautomaten authentifiziert ist, der Zusteller 5 allerdings seine Be- oder Entladetätigkeit noch nicht durch eine aktive für normale Kunden nicht ohne weiteres erkennbare (das heißt versteckte) Handlung bestätigt hat (zum Beispiel eine Bestimmte Aktion auf dem Ein-/Ausgabegerät), wechselt der Sendungsautomat 3 bzw. die Anzeige des Sendungsautomaten 3 nicht in den Zusteller-Betriebsmodus, sondern es läuft der Kunden-Betriebsmodus weiter (Normalbetriebsbildschirm). So kann sichergestellt werden, dass die Anmeldungen von Kunden am Sendungsautomaten mit Priorität behandelt werden und niemand den Zusteller-Betriebsmodus missbrauchen kann.

Wurde nun an dem Sendungsautomaten 3 eine Anwesenheit des Zustellers 5 an dem Sendungsautomaten 3 zur Ausübung einer Belade- und/oder Entladetätigkeit erfasst (durch die spezifische Handlung oder Interaktion des Zustellers 5), Aktion 305, wird ein Zusteller-Betriebsmodus des Sendungsautomaten aktiviert, Aktion 306.

Nun kann mittels einer vom Fahrzeug unabhängigen Authentifizierungsmethode ein Authentifizieren des Zustellers 5 an dem Sendungsautomaten 3 erfolgen, Aktion 307, wie auch in Fig. 2b mit Pfeil 8 dargestellt. Dies kann beispielsweise mittels einer Eingabe einer PIN oder dem Scannen eines Strichcodes des Mitarbeiterausweises erfolgen, um nur zwei Beispiele zu nennen.

Wurde die Verbindung zwischen dem Fahrzeug 2 und dem Sendungsautomaten 3 zwischenzeitlich getrennt, ist keine weitere Authentifizierung notwendig, solange die Trennung der Verbindung nicht länger als eine festgelegte Zeitdauer andauert.

Der Zusteller 5 kann nun bei bestehender Verbindung zwischen Fahrzeug 2 und Sendungsautomat 3, nachdem zudem seine Anwesenheit zur Be- bzw. Entladetätigkeit durch die Aktionen 305, 307 bestätigt sind, ohne weitere Authentifizierung sofort beginnen, durch den Sendungsautomaten Sendungsinformationen erfassen zu lassen, Aktion 308.

Durch den Benutzer 5 oder alternativ auch automatisiert durch das Fahrzeug 2 oder den Sendungsautomaten 3 kann ein Laden von Sendungen 6 in den Sendungsautomaten 3 (beispielhaft dargestellt in Fig. 2c) bzw. ein Laden von Sendungen aus dem Sendungsautomaten 3 erfolgen, Aktion 309.

Am Ende der Zustelltour meldet sich der Zusteller 5 am Fahrzeug 2 ab, dadurch wird auch die erfolgte Authentifizierung oder Assoziation zwischen Zusteller 5 und Fahrzeug 2 getrennt. Sollte der Zusteller 5 dies vergessen, kann eine automatische Trennung dieser Verbindung erfolgen, beispielsweise nach einer vorbestimmten Zeitdauer von Inaktivität (beispielsweise am Fahrzeug), etwa nach mehreren Stunden (beispielsweise nach 6 Stunden).

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus.

Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren zum Be- und/oder Entladen eines Sendungsautomaten (2) mit Sendungen (6) durch einen Benutzer (5) mit einem Fahrzeug (3) oder zur Vorbereitung hiervon, wobei der Benutzer ein Zusteller und das Fahrzeug ein Zustellerfahrzeug ist, **dadurch gekennzeichnet, dass** das Verfahren umfasst:
- Authentifizieren des Benutzers (5) an dem Fahrzeug (2), wobei zur Authentifizierung des Benutzers (5) an dem Fahrzeug (2) Authentifizierungsinformationen des Benutzers (5) an dem Fahrzeug (2) erhalten werden;
- Verbringen des Fahrzeugs (2) in Kommunikationsreichweite zur Kommunikation mit dem Sendungsautomaten (3);
- Authentifizieren des Fahrzeugs (2) an dem Sendungsautomaten (3), wobei zur Authentifizierung des Fahrzeugs an dem Sendungsautomaten Authentifizierungsinformationen vom Fahrzeug an den Sendungsautomaten bereitgestellt werden, wobei die an dem Sendungsautomaten (3) erhaltenen Authentifizierungsinformationen des Fahrzeugs (2) zumindest teilweise auf den am Fahrzeug erhaltenen Authentifizierungsinformationen des Benutzers (5) basieren;
- Erfassen, an dem Sendungsautomaten (3), einer Anwesenheit des Benutzers (5) an dem Sendungsautomaten (3) zur Ausübung einer Belade- und/oder Entladetätigkeit, wobei das Erfassen der Anwesenheit des Benutzers (5) durch eine spezifische Interaktion des Benutzers (5) mit einer Benutzerschnittstelle des Sendungsautomaten (3) erfolgt, entweder wobei die Benutzerschnittstelle ein verdeckter Schalter oder Touch-Screen ist oder wobei die Benutzerschnittstelle ein Eingabegerät ist, welches auch vom Kunden benutzt wird, und die spezifische Interaktion eine nicht offensichtliche Aktion mit dem Eingabegerät ist;
- Aktivieren eines Zusteller-Betriebsmodus des Sendungsautomaten (3), wobei der Zusteller-Betriebsmodus weitere Dienste oder Funktionen umfasst, die nicht für den Kunden vorgesehen sind;
- Authentifizieren des Benutzers an dem Sendungsautomaten im Zusteller-Betriebsmodus; und
- Laden von Sendungen (6) in den Sendungsautomaten (3) und/oder Laden von Sendungen (6) aus dem Sendungsautomaten (3).

2. Verfahren nach einem der vorhergehenden Ansprüche, wobei das Authentifizieren des Benutzers (5) an dem Fahrzeug (2), das Authentifizieren des Fahrzeugs (2) an dem Sendungsautomaten (3) und/oder das Authentifizieren des Benutzers (5) an dem Sendungsautomaten (3) ein Challenge-Response-Verfahren umfasst.

3. Verfahren nach einem der vorhergehenden Ansprüche, wobei die Authentifizierung des Fahrzeugs (2) an dem Sendungsautomaten (3) ausschließlich und/oder automatisch erfolgt, wenn sich das Fahrzeug (2) in Kommunikationsreichweite mit und/oder sich näher als eine vorgegebene räumliche Entfernung an dem Sendungsautomaten (3) befindet.

4. Verfahren nach einem der vorhergehenden Ansprüche, weiterhin umfassend:
- wiederholtes automatisches Überprüfen durch das Fahrzeug (2), ob ein Sendungsautomat (3) in Kommunikationsreichweite und/oder näher als eine vorgegebene räumliche Entfernung ist; und
- Aufbauen einer Kommunikationsverbindung mit dem Sendungsautomaten (3), wenn das Überprüfen ergibt, dass der Sendungsautomat (3) in Kommunikationsreichweite und/oder näher als eine vorgegebene räumliche Entfernung ist.

5. Verfahren nach einem der vorhergehenden Ansprüche, wobei durch das oder nach dem Authentifizieren des Fahrzeugs (2) an dem Sendungsautomaten (3) eine Anmeldung des Fahrzeugs (2) an dem Sendungsautomaten (3) und/oder durch das oder nach dem Authentifizieren des Benutzers (5) an dem Sendungsautomaten (3) eine Anmeldung des Benutzers (5) an dem Sendungsautomaten (3) erfolgt.

6. Verfahren nach Anspruch 4 und 5, wobei das wiederholte automatische Überprüfen durch das Fahrzeug (2), ob ein Sendungsautomat (3) in Kommunikationsreichweite und/oder näher als eine vorgegebene räumliche Entfernung ist, auch dann erfolgt, wenn eine Authentifizierung des Fahrzeugs (2) an einem Sendungsautomaten (3) besteht.

7. Verfahren nach einem der vorhergehenden Ansprüche, wobei die Authentifizierung des Fahrzeugs (2) an dem Sendungsautomaten (3) so lange aufrechterhalten wird, wie sich das Fahrzeug (2) in Kommunikationsreichweite zur Kommunikation mit dem Sendungsautomaten (3) befindet und/oder eine Kommunikationsverbindung zwischen dem Sendungsautomaten (3) und dem Fahrzeug (2) besteht und/oder keine anderweitige Authentifizierung am Sendungsautomaten (3) erfolgt.

8. Verfahren nach einem der vorhergehenden Ansprüche, wobei für den Fall, dass sich mehrere Sendungsautomaten (3) in Kommunikationsreichweite mit dem Fahrzeug (2) befinden, ein Authentifizieren des Fahrzeugs (2) vorzugsweise an demjenigen Sendungsautomaten (3) erfolgt, welcher räumlich am nächsten gelegen ist.

9. Verfahren nach einem der vorhergehenden Ansprüche, wobei ein erneutes Authentifizieren des Benutzers (5) und/oder des Fahrzeugs (2) am Sendungsautomaten (3) und/oder Anmelden des Benutzers (5) und/oder des Fahrzeugs (2) am Sendungsautomaten (3) nicht erforderlich ist, solange die Kommunikation zwischen dem Fahrzeug (2) und dem Sendungsautomaten (3) nicht oder nicht länger als eine vorgegebene Zeitdauer unterbrochen wird.

10. Verfahren nach einem der vorhergehenden Ansprüche, wobei das Verfahren weiterhin umfasst:
- Erfassen, an dem Sendungsautomaten (3), von Sendungsinformationen von in den Sendungsautomaten (3) zu ladenden oder geladenen Sendungen (6).

11. Verfahren einem der vorhergehenden Ansprüche, wobei der Sendungsautomat (3) eine Paketstation, ein Paketautomat und/oder ein Paketkasten ist.

12. Vorrichtung eingerichtet zur Ausführung oder umfassend Mittel zur Ausführung des Verfahrens nach einem der Ansprüche 1 bis 11.

13. System umfassend:
- einen Sendungsautomaten (3) und
- ein Fahrzeug (2), wobei das Fahrzeug ein Zustellerfahrzeug ist,
wobei das System zur Ausführung des Verfahrens nach einem der Ansprüche 1 bis 11 eingerichtet ist oder entsprechende Mittel umfasst.

14. Computerprogrammprodukt umfassend Programmanweisungen, um ein Verfahren nach einem der Ansprüche 1 bis 11 auszuführen, wenn das Programm auf einem Prozessor (10) ausgeführt wird

## Claims

1. A method for loading and/or unloading an automated shipment machine (2) with shipments (6) by means of a user (5) with a vehicle (3) or for preparing same, wherein the user is a delivery agent and the vehicle is a delivery vehicle, **characterized in that** the method comprises:
- authenticating the user (5) at the vehicle (2), wherein authentication information of the user (5) at the vehicle (2) is obtained for authenticating the user (5) at the vehicle (2);
- taking the vehicle (2) within communication range for communication with the automated shipment machine (3);
- authenticating the vehicle (2) at the automated shipment machine (3), wherein authentication information is provided from the vehicle to the automated shipment machine for authenticating the vehicle at the automated shipment machine, wherein the authentication information of the vehicle (2) received at the automated shipment machine (3) is at least partially based on the authentication information of the user (5) received at the vehicle;
- detecting, at the automated shipment machine (3), a presence of the user (5) at the automated shipment machine (3) for performing a loading and/or unloading activity, wherein the detection of the presence of the user (5) is performed by a specific interaction of the user (5) with a user interface of the automated shipment machine (3), either wherein the user interface is a concealed switch or touch screen, or wherein the user interface is an input device which is also used by the customer, and the specific interaction is a non-obvious action with the input device;
- activating a delivery agent mode of operation of the automated shipment machine (3), wherein the delivery agent mode of operation comprises further services or functions that are not intended for the customer;
- authenticating the user at the automated shipment machine in the delivery agent mode of operation; and
- loading shipments (6) into the automated shipment machine (3) and/or loading shipments (6) from the automated shipment machine (3).

2. The method according to any one of the preceding claims, wherein the authenticating of the user (5) at the vehicle (2), the authenticating of the vehicle (2) at the automated shipment machine (3) and/or the authenticating of the user (5) at the automated shipment machine (3) comprises a challenge-response method.

3. The method according to any one of the preceding claims, wherein the authentication of the vehicle (2) at the automated shipment machine (3) takes place exclusively and/or automatically when the vehicle (2) is within communication range of and/or closer than a predetermined spatial distance to the automated shipment machine (3).

4. The method according to any one of the preceding claims, further comprising:
- repeatedly automatically checking, by means of the vehicle (2), whether an automated shipment machine (3) is within communication range and/or closer than a predetermined spatial distance; and
- setting up a communication connection to the automated shipment machine (3) if the check result of the checking is that the automated shipment machine (3) is within communication range and/or closer than a predetermined spatial distance.

5. The method according to any one of the preceding claims, wherein by or after the authentication of the vehicle (2) at the automated shipment machine (3), a registration of the vehicle (2) at the automated shipment machine (3) and/or by or after the authentication of the user (5) at the automated shipment machine (3), a registration of the user (5) at the automated shipment machine (3) takes place.

6. The method according to claims 4 and 5, wherein the repeated automatic checking by means of the vehicle (2) as to whether an automated shipment machine (3) is within communication range and/or closer than a predetermined spatial distance takes place even if an authentication of the vehicle (2) at an automated shipment machine (3) exists.

7. The method according to any one of the preceding claims, wherein the authentication of the vehicle (2) at the automated shipment machine (3) is maintained as long as the vehicle (2) is within communication range for communication with the automated shipment machine (3) and/or a communication connection between the automated shipment machine (3) and the vehicle (2) exists and/or no other authentication at the automated shipment machine (3) takes place.

8. The method according to any one of the preceding claims, wherein, in the event that multiple automated shipment machines (3) are within communication range of the vehicle (2), an authenticating of the vehicle (2) preferably takes place at the automated shipment machine (3) which is spatially closest.

9. The method according to any one of the preceding claims, wherein a renewed authentication of the user (5) and/or of the vehicle (2) at the automated shipment machine (3) and/or registering of the user (5) and/or of the vehicle (2) at the automated shipment machine (3) is not required as long as the communication between the vehicle (2) and the automated shipment machine (3) is not interrupted or is not interrupted for longer than a predetermined period of time.

10. The method according to any one of the preceding claims, wherein the method further comprises:
- detecting, at the automated shipment machine (3), shipment information of shipments (6) to be loaded or loaded into the automated shipment machine (3).

11. The method according to any one of the preceding claims, wherein the automated shipment machine (3) is a parcel station, an automated parcel machine and/or a parcel box.

12. An apparatus configured for performing or comprising means for performing the method according to any one of claims 1 to 11.

13. A system comprising:
- an automated shipment machine (3), and
- a vehicle (2), wherein the vehicle is a delivery vehicle,
wherein the system is configured for performing the method according to any one of claims 1 to 11 or comprises corresponding means.

14. A computer program product comprising program instructions for performing a method according to any one of claims 1 to 11 when the program is executed on a processor (10).

## Revendications

1. Procédé de chargement et/ou de déchargement d'un automate d'envoi (2) avec des envois (6) par un utilisateur (5) avec un véhicule (3) ou de préparation de celui-ci, dans lequel l'utilisateur est un agent de livraison et le véhicule est un véhicule de livraison, **caractérisé en ce que** le procédé comprend :
- authentifier l'utilisateur (5) auprès du véhicule (2), dans lequel, pour authentifier l'utilisateur (5) auprès du véhicule (2), des informations d'authentification de l'utilisateur (5) auprès du véhicule (2) sont obtenues ;
- placer le véhicule (2) dans la zone de communication avec l'automate d'envoi (3) ;
- authentifier le véhicule (2) auprès de l'automate d'envoi (3), des informations d'authentification étant mises à disposition par le véhicule à l'automate d'envoi pour authentifier le véhicule auprès de l'automate d'envoi, les informations d'authentification du véhicule (2) reçues à l'automate d'envoi (3) étant basées au moins partiellement sur les informations d'authentification de l'utilisateur (5) reçues au véhicule ;
- détecter, auprès de l'automate d'envoi (3), d'une présence de l'utilisateur (5) auprès de l'automate d'envoi (3) pour effectuer une opération de chargement et/ou de déchargement, la détection de la présence de l'utilisateur (5) étant effectuée par une interaction spécifique de l'utilisateur (5) avec une interface utilisateur de l'automate d'envoi (3), soit dans laquelle l'interface utilisateur est un commutateur dissimulé ou un écran tactile, soit dans laquelle l'interface utilisateur est un dispositif d'entrée qui est également utilisé par le client, et l'interaction spécifique est une action non apparente avec le dispositif d'entrée ;
- activer un mode de fonctionnement de l'agent de livraison de l'automate d'envoi (3), dans lequel le mode de fonctionnement de l'agent de livraison comprend d'autres services ou fonctions qui ne sont pas prévus pour le client ;
- authentifier l'utilisateur auprès de l'automate d'envoi dans le mode de fonctionnement de l'agent de livraison ; et
- charger des envois (6) dans l'automate d'envoi (3) et/ou charger des envois (6) hors l'automate d'envoi (3).

2. Le procédé selon l'une quelconque des revendications précédentes, dans lequel l'authentification de l'utilisateur (5) auprès du véhicule (2), l'authentification du véhicule (2) auprès de l'automate d'envoi (3) et/ou l'authentification de l'utilisateur (5) auprès de l'automate d'envoi (3) comprend un procédé du type « challenge/response ».

3. Le procédé selon l'une quelconque des revendications précédentes, dans lequel l'authentification du véhicule (2) à l'automate d'envoi (3) s'effectue exclusivement et/ou automatiquement lorsque le véhicule (2) se trouve à portée de communication avec et/ou plus proche qu'une distance spatiale prédéterminée de l'automate d'envoi (3).

4. Le procédé selon l'une quelconque des revendications précédentes, comprenant en outre :
- vérifier automatiquement de manière répétée, par le véhicule (2) qu'un automate d'envoi (3) est à portée de communication et/ou plus proche qu'une distance spatiale prédéterminée ; et
- établir une liaison de communication avec l'automate d'envoi (3) lorsque la vérification indique que l'automate d'envoi (3) est à portée de communication et/ou plus proche qu'une distance spatiale prédéterminée.

5. Le procédé selon l'une quelconque des revendications précédentes, dans lequel, par ou après l'authentification du véhicule (2) auprès de l'automate d'envoi (3), une inscription du véhicule (2) auprès de l'automate d'envoi (3) et/ou par ou après l'authentification de l'utilisateur (5) auprès de l'automate d'envoi (3), une inscription de l'utilisateur (5) auprès de l'automate d'envoi (3) est effectuée.

6. Le procédé selon les revendications 4 et 5, dans lequel la vérification automatique répétée par le véhicule (2) de la présence d'un automate d'envoi (3) à portée de communication et/ou plus proche qu'une distance spatiale prédéterminée est effectuée même s'il existe une authentification du véhicule (2) auprès d'un automate d'envoi (3).

7. Le procédé selon l'une quelconque des revendications précédentes, dans lequel l'authentification du véhicule (2) auprès de l'automate d'envoi (3) est maintenue aussi longtemps que le véhicule (2) se trouve à portée de communication pour communiquer avec l'automate d'envoi (3) et/ou qu'une liaison de communication existe entre l'automate d'envoi (3) et le véhicule (2) et/ou qu'aucune autre authentification n'est effectuée auprès de l'automate d'envoi (3).

8. Le procédé selon l'une quelconque des revendications précédentes, dans lequel, dans le cas où plusieurs automates d'envoi (3) se trouvent à portée de communication avec le véhicule (2), une authentification du véhicule (2) s'effectue de préférence auprès de l'automate d'envoi (3) qui est spatialement le plus proche.

9. Le procédé selon l'une quelconque des revendications précédentes, dans lequel une nouvelle authentification de l'utilisateur (5) et/ou du véhicule (2) auprès de l'automate d'envoi (3) et/ou inscription de l'utilisateur (5) et/ou du véhicule (2) auprès de l'automate d'envoi (3) n'est pas nécessaire tant que la communication entre le véhicule (2) et l'automate d'envoi (3) n'est pas interrompue ou n'est pas interrompue pendant plus d'une durée prédéterminée.

10. Le procédé selon l'une quelconque des revendications précédentes, dans lequel le procédé comprend en outre :
- détecter, auprès de l'automate d'envoi (3), d'informations d'envoi d'envois (6) à charger ou chargés dans l'automate d'envoi (3).

11. Le procédé selon l'une quelconque des revendications précédentes, dans lequel l'automate d'envoi (3) est une station de colis, un automate de colis et/ou une boîte de colis.

12. Dispositif configuré pour exécuter ou comprenant des moyens pour exécuter le procédé selon l'une des revendications 1 à 11.

13. Système comprenant :
- un automate d'envoi (3), et
- un véhicule (2), le véhicule étant un véhicule de livraison,
le système étant configuré pour exécuter le procédé selon l'une des revendications 1 à 11 ou comprend des moyens correspondants.

14. Produit de programme informatique comprenant des instructions de programme pour exécuter un procédé selon l'une des revendications 1 à 11 lorsque le programme est exécuté sur un processeur (10).
